# DEMANDE DE BREVET EUROPEEN

(11) **EP 3 583 995 A1**
(43) Date de publication de la demande: **25.12.2019**
(21) Numéro de dépôt: 18305749.6
(22) Date de dépôt: 18.06.2018
(51) Int. Cl.: B01D 53/04, B01D 53/32

(54) **SYSTÈME DE TRAITEMENT D'AIR**

(71) Demandeur: Air Serenity, 91400 Orsay (FR)
(72) Inventeur: YOUSSEF, Joseph, 91300 MASSY (FR)
(74) Mandataire: Gauchet, Fabien Roland

(57) **Abrégé**

Le système de traitement (1) d'un flux d'air (2) comprend
- Une conduite principale (10) d'écoulement d'air comprenant une entrée (11) et une sortie (12) d'air,
- Des moyens de ventilation (111,121) générant le flux d'air dans la conduite principale entre l'entrée et la sortie d'air,
- Un ensemble adsorbant (21,41) de polluants présents dans l'air, perméable à l'air et disposé à travers le flux d'air au sein de la conduite principale,
- Des moyens de production de plasma (31) agencés pour produire des espèces actives capables de dégrader des composés polluant préalablement adsorbés par l'ensemble adsorbant, et
- Une unité de contrôle (13) activant, lors d'un fonctionnement du système de traitement, les moyens de production de plasma durant une phase de régénération de l'ensemble adsorbant,
les moyens de production de plasma étant positionnés au sein de l'ensemble adsorbant, les espèces actives produites étant libérées au sein de l'ensemble adsorbant lors de la mise en oeuvre des moyens de production de plasma.

## Description

### DOMAINE TECHNIQUE DE L'INVENTION

L'invention concerne un système de traitement d'air, en particulier, un système de traitement d'air permettant de purifier l'air dans un volume intérieur de bâtiment.

### ETAT DE LA TECHNIQUE ANTERIEURE

La pollution de l'air ambiant est plus importante que la pollution de l'air extérieur. Elle est multiple et composée de trois familles de pollution : la pollution microbienne composée de virus, bactéries, pollens,... ; la pollution chimique composée des composés organiques volatils dont le formaldéhyde est le plus présent et cancérigène, le CO2, les NOx,... ; et la pollution particulaire dont les particules de type PM10, PM2.5 et PM1. Les composés organiques volatils constituent une pollution importante de l'air ambiant au sein des bâtiments d'habitation ou de bureaux.

Actuellement, du fait des aspects thermiques des bâtiments, le compromis ventilation/ qualité de l'air intérieur est complexe à résoudre. Une première solution est d'importer de l'air neuf depuis l'extérieur avec, selon la localisation, un coût de chauffage en hiver et de refroidissement en été qui peut être très important. Une deuxième solution est de traiter directement l'air ambiant d'un bâtiment via un système dédié.

De nombreux systèmes de traitement d'air ont déjà été proposés. Ils permettent de réduire, au principal, la concentration des composés organiques volatils à l'intérieur des bâtiments. Certains de ces systèmes sont basés sur l'utilisation d'adsorbants capables de retenir une partie des composés organiques volatils qui sont contenus dans l'air, lorsqu'un flux d'air traverse le ou les adsorbants. Mais la capacité d'adsorption de l'ensemble adsorbant diminue progressivement pendant une période de fonctionnement prolongée, jusqu'à atteindre un état de saturation de l'ensemble adsorbant. Il est alors nécessaire de remplacer l'ensemble adsorbant, ou de le régénérer pour restaurer son efficacité. Remplacer l'ensemble adsorbant saturé par un ensemble nouveau pose la difficulté du démontage de l'ensemble adsorbant saturé, et de son conditionnement pendant qu'il est transporté jusqu'à un centre de retraitement ou de régénération. Pour cela, il est intéressant de combiner des moyens de régénération de l'ensemble adsorbant avec le système de traitement d'air. En effet, il suffit alors de commander un ou plusieurs cycles de régénération de l'ensemble adsorbant après chaque période de fonctionnement en purification d'air, pour que le système recouvre tout ou partie de son efficacité initiale de purification.

Il est également connu d'utiliser des moyens de production de plasma pour régénérer l'ensemble adsorbant. En effet, un plasma produit des espèces actives, principalement des espèces chimiques oxydantes, qui sont capables de dégrader chimiquement les composés organiques volatils ainsi adsorbés. Pour cela, les espèces actives produites par plasma doivent être mises en contact avec les composés organiques qui ont été adsorbés pendant la période de fonctionnement en traitement d'air.

Le document WO 2012/127169 propose de disposer une unité de production de plasma à proximité d'un ensemble adsorbant de composés organiques volatils, dans une conduite d'écoulement secondaire, en plus de la conduite principale, qui permet une recirculation de l'air pendant la régénération des éléments adsorbants. Une telle disposition permet à des espèces actives instables qui sont produites par le plasma pendant une période de régénération, d'atteindre l'intérieur de l'ensemble adsorbant pour réagir avec les composés organiques préalablement adsorbés. Pendant une période de fonctionnement en purification d'air, la conduite secondaire est inutilisée, alors que pendant la régénération, l'air circule en circuit fermé de façon continue dans la conduite principale et dans la conduite secondaire. De cette façon, des espèces actives qui sont produites par le plasma de régénération, notamment de l'ozone, ne diffusent pas dans l'air ambiant à l'extérieur du système de traitement pendant le fonctionnement de régénération. Toutefois, une telle structure est relativement volumineuse et complexe à réaliser.

### EXPOSE DE L'INVENTION

Un but de l'invention est de fournir un système de traitement d'air qui soit compact, simple à réaliser tout en restant efficace et facile d'utilisation.

**A** cette fin, il est prévu, selon l'invention, un système de traitement d'un flux air comprenant une conduite principale d'écoulement du flux d'air comprenant une entrée et une sortie d'air, des moyens de ventilation agencés de sorte à générer le flux d'air dans la conduite principale entre l'entrée et la sortie d'air, un ensemble adsorbant de polluants susceptibles d'être présents dans l'air, perméable à l'air et disposé à travers le flux d'air au sein de la conduite principale, des moyens de production de plasma agencés de sorte à produire des espèces actives capables de dégrader des composés polluant préalablement adsorbés par l'ensemble adsorbant, et une unité de contrôle agencée de sorte à activer, lors d'un fonctionnement du système de traitement d'un flux d'air, les moyens de production de plasma durant une phase de régénération de l'ensemble adsorbant, les moyens de production de plasma étant positionnés au sein de l'ensemble adsorbant, les espèces actives produites étant libérées au sein de l'ensemble adsorbant lors de la mise en oeuvre des moyens de production de plasma.

Avantageusement, mais facultativement, le système de traitement de l'air selon l'invention présente au moins l'une des caractéristiques techniques suivantes :
- l'ensemble adsorbant est disposé parallèlement à la conduite principale ;
- l'ensemble adsorbant forme un cylindre coaxial à la conduite principale ;
- le système comporte une cage dans laquelle est aménagé l'ensemble adsorbant ;
- la cage comporte une première paroi pleine d'extrémité comprenant un orifice central et s'étendant en travers de la conduite principale, une portion cylindrique à double paroi grillagée s'étendant en saillie depuis la première paroi d'extrémité autour de l'orifice central et recevant l'ensemble adsorbant, une deuxième paroi pleine d'extrémité s'étendant en travers de la conduite principale, en regard de l'orifice central ;
- la deuxième paroi pleine d'extrémité comporte, dans son plan, sur une périphérie circonférentielle radialement externe un anneau à double paroi grillagée ;
- en amont de l'ensemble adsorbant dans le flux d'air, le système comporte des moyens de filtration des particules susceptibles d'être présentes dans l'air ;
- les moyens de filtration des particules comprennent un précipitateur électrostatique ;
- le système comporte un filtre HEPA, UPLA, ou à charbon actif ou autres ;
- le filtre HEPA ou à charbon actif est agencé entre les parois de l'anneau à double paroi grillagée ;
- le système comporte en outre une source de rayons ultra-violets positionnée dans le flux d'air circulant au sein de la conduite principale ;
- les moyens de production de plasma comprennent une série d'électrodes uniformément réparties dans l'ensemble adsorbant ;
- les électrodes sont des électrodes allongées formant des tiges ;
- les électrodes sont des électrodes de forme annulaire ; et,
- le système comporte un capteur relié à l'unité de contrôle et fournissant à l'unité de contrôle des informations de qualité de l'air mesuré par ledit capteur.

### BREVE DESCRIPTION DES FIGURES

D'autres caractéristiques et avantages de l'invention ressortiront à la lecture de la description qui suit d'un mode de réalisation de l'invention. Aux dessins annexés :
- la figure 1 est une vue en coupe schématique d'un mode de réalisation d'un système de traitement d'air selon l'invention ;
- la figure 2 est une vue en coupe selon II-II de la figure 1 ; et,
- la figure 3 est une vue en coupe similaire à la figure 2 illustrant une variante de réalisation du système de traitement d'air selon l'invention.

Pour plus de clarté, les éléments identiques ou similaires sont repérés par des signes de référence identiques sur l'ensemble des figures.

### DESCRIPTION DETAILLEE D'UN MODE DE REALISATION

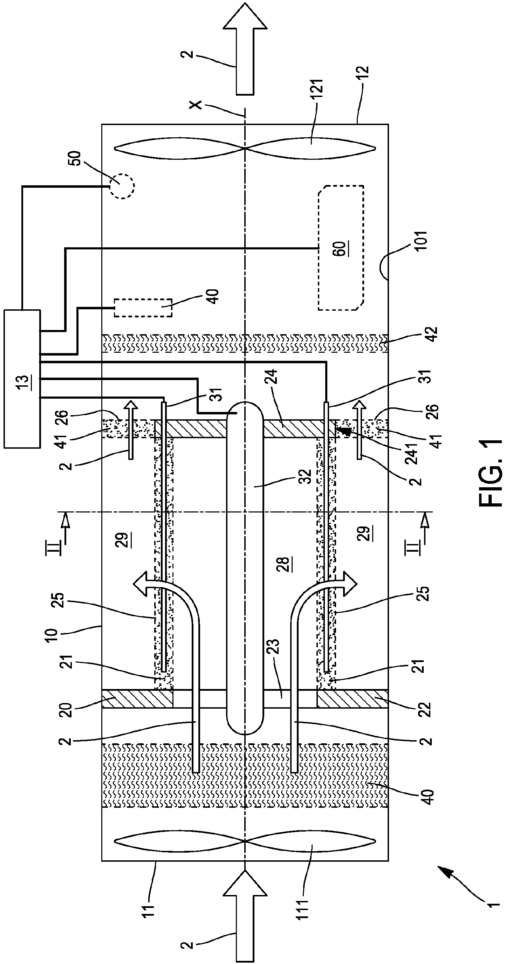

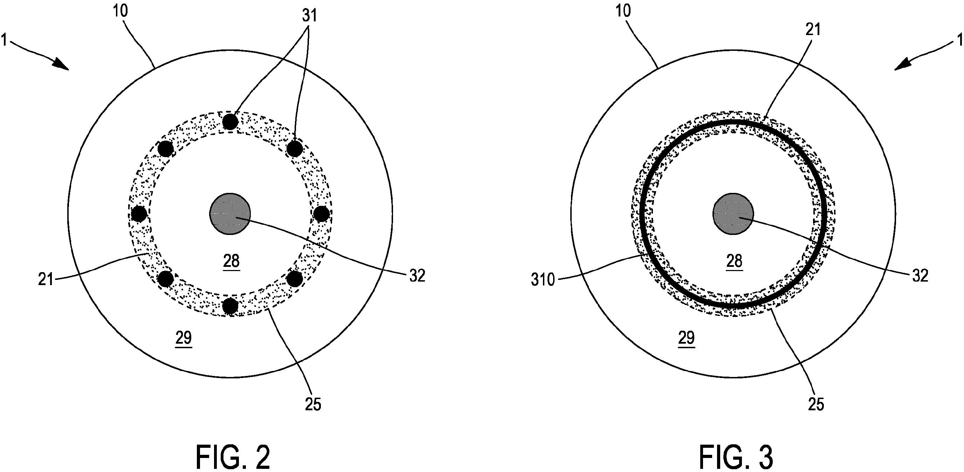

En référence aux figures 1 et 2, nous allons décrire un mode de réalisation d'un système de traitement d'air 1 selon l'invention.

Le système de traitement d'air 1 selon l'invention comporte une unité de contrôle 13 et une conduite principale 10 d'axe longitudinal X. La conduite principale 10 s'étend entre une entrée d'air 11 et une sortie d'air 12. La conduite principale 10 est, ici, de forme cylindrique, en particulier de forme cylindrique de révolution d'axe X. Un flux d'air 2 est généré au sein de la conduite d'air 10 entre l'entrée d'air 11 et la sortie 12. Afin de générer ce flux d'air 2, le système de traitement d'air 1 selon l'invention comporte, ici, des moyens de ventilation 121,111 pilotés par l'unité de contrôle 13. Les moyens de ventilation comportent une unité principale de ventilation 121 disposée dans la conduite principale 10 entre l'entrée d'air 11 et la sortie d'air 12. De manière optionnelle, les moyens de ventilation peuvent comprendre une unité de ventilation secondaire 111 disposée dans la conduite principale. Par exemple, ici illustré, l'unité de ventilation principale 121 est placée au niveau de la sortie d'air 12 et l'unité de ventilation secondaire 111 est positionnée au niveau de l'entrée d'air 11. Il est à noter que, dans le cas d'une implantation du système de traitement d'air 1 selon l'invention dans un système de ventilation existant, la présence des moyens de ventilation 121,111 n'est pas nécessaire, en particulier si le système de ventilation existant présente une faible perte de charge. Dans une autre variante de réalisation du système de traitement d'air 1 selon l'invention, un seul des moyens de ventilation 121,111 est présent.

Le flux d'air 2 généré par les moyens de ventilation 121,111 (ou autre selon l'implantation) entre dans la conduite principale 10 du système de traitement d'air 1 selon l'invention au niveau de l'entrée d'air 11. Dans un premier temps, le flux d'air 2 passe au travers de moyens de filtration des particules 40, qui sont optionnels, qui sont disposés dans la conduite principale 10, ici en aval de l'unité de ventilation secondaire 111. Les moyens de filtration des particules 40 comprennent un filtre particulaire couramment disponible et bien connu en soi, comme par exemple un filtre HEPA ou UPLA. En variante, les moyens de filtration des particules 40 comportent, alternativement ou en combinaison avec le filtre particulaire précédemment cité, un filtre anti-allergène et/ou un précipitateur électrostatique (équipé d'un bloc chauffant de nettoyage si nécessaire) de type plan-plan ou de type fil-plan, et/ou un filtre en nano-fibres, etc...

Ensuite, le flux d'air 2 traverse une cage 20 positionnée dans la conduite principale 10 entre l'entrée d'air 11 et la sortie d'air 12. La cage 20 comporte, ici, de gauche à droite sur la figure 1 :
- une première paroi 22 pleine d'extrémité qui s'étend en travers de la conduite principale 10 sensiblement perpendiculairement à son axe longitudinal X. La première paroi 22 pleine d'extrémité comporte en son centre un orifice central 23 traversant une épaisseur de la première paroi 22.
- une portion cylindrique 25 qui s'étend en saillie depuis la première paroi 22 pleine d'extrémité, autour de l'orifice central 23, vers une deuxième paroi 24 pleine d'extrémité. La portion cylindrique 25 comporte une double paroi grillagée. L'espace ainsi délimité entre les deux parois permet de recevoir un ensemble adsorbant 21 de composés polluants susceptibles d'être présents dans le flux d'air 2 qui pénètre dans la conduite principale 10 par l'entrée d'air 11 du système de traitement d'air 1 selon l'invention. Ainsi, les parois grillagées permettent au flux d'air 2 de traverser l'espace ainsi délimité et donc de traverser l'ensemble adsorbant 21.
- une deuxième paroi 24 pleine d'extrémité qui s'étend en travers de la conduite principale 10 sensiblement perpendiculairement à son axe longitudinal X. La deuxième paroi 24 s'étend en regard et à distance de l'orifice central 23. La deuxième paroi 24 forme un fond de la portion cylindrique 25 de sorte à délimiter avec cette dernière un volume interne 28 de la cage 20, le volume interne 28 étant ouvert du côté de l'orifice central 23. D'autre part, la deuxième paroi 24 présente une périphérie circonférentielle radialement externe 241 qui s'étend en regard et à distance d'une paroi interne 101 de la conduite principale 10.

Ici, la deuxième paroi 24 pleine d'extrémité comporte en outre un anneau 26 à double paroi grillagée qui s'étend de manière centrifuge depuis la périphérie circonférentielle radialement externe 241. L'espace ainsi délimité entre les deux parois permet de recevoir un élément 41 filtrant de type HEPA ou UPLA ou encore d'un autre type, et/ou un deuxième ensemble adsorbant de composés polluants susceptibles d'être présents dans le flux d'air 2 qui pénètre dans la conduite principale 10 par l'entrée d'air 11 du système de traitement d'air 1 selon l'invention. Ainsi, les parois grillagées permettent au flux d'air 2 de traverser l'espace ainsi délimité et donc de traverser l'élément 41. D'autre part, l'anneau 26, la portion cylindrique 25, la première paroi 22 et la paroi interne 101 de la conduite principale 10 délimitent un volume externe annulaire 29 de la cage 20 entourant de manière radiale externe le volume interne 28 et séparé de ce dernier par la portion cylindrique 25. En variante de réalisation, le système de traitement d'air 1 selon l'invention comporte un deuxième élément de filtration 42 situé en aval de l'élément 41 et qui vient en complément ou en remplacement de l'élément 41. En particulier, ce deuxième élément de filtration 42 est un filtre HEPA ou ULPA par exemple.

Lors d'un fonctionnement, le flux d'air 2 pénètre dans la cage 20 par l'orifice central 23 pour circuler dans le volume interne 28, puis traverse la portion cylindrique 25, et donc l'ensemble adsorbant 21, pour déboucher dans le volume externe annulaire 29. Ensuite le flux d'air 2 traverse l'anneau 26, et donc l'élément 41 filtrant, puis le deuxième élément de filtration 42 éventuellement, et sort ainsi de la cage 20.

De sorte à régénérer l'ensemble adsorbant 21, le système de traitement d'air 1 selon l'invention comporte des moyens de production de plasma 31,310 qui sont positionnés au sein de l'ensemble adsorbant 21. Ainsi les moyens de production de plasma 31,310 sont noyés dans l'élément adsorbant qu'ils doivent régénérer, permettant une libération d'espèces actives ainsi produites directement dans l'ensemble adsorbant 21. Les parois de la portion cylindrique 25 forment ici une électrode de masse pour les moyens de production de plasma et peuvent être formées, à cette fin, d'un grillage métallique. Une telle installation permet de réaliser des décharges volumiques ou surfaciques de plasma selon le positionnement relatif des différentes électrodes agencées en fonction des besoins et de la mise en oeuvre des moyens de production de plasma. De même, dans des variantes de réalisation, les moyens de production de plasma sont agencés de sorte à utiliser, entre autres, une configuration d'électrodes dites « plan/plan » ou « plan/cylindrique ».

Selon une première forme de réalisation, illustrée aux figures 1 et 2, les moyens de production de plasma comprennent une série d'électrodes 31 qui s'étendent longitudinalement dans l'espace délimité par les parois de la portion cylindrique 25 à double paroi grillagée. Les électrodes 31 sont fixées à travers et maintenues par la deuxième paroi 24. Les électrodes 31 sont connectées et alimentées par l'unité de contrôle 13 du système de traitement d'air 1 selon l'invention. Ici la série d'électrodes 31 comportent huit électrodes 31 uniformément réparties sur une circonférence de la portion cylindrique 25. En variante, le nombre d'électrode 31 peut varier de deux à douze, voir plus : ce nombre est déterminer en fonction des dimensions de la cage 20, et en particulier de la portion cylindrique 25 recevant l'élément adsorbant 21.

Selon une deuxième forme de réalisation illustrée en figure 3, les moyens de production de plasma comprennent des électrodes 310 qui sont annulaires et réparties tout le long, longitudinalement, de la portion cylindrique 25.

De manière optionnelle, le système de traitement d'air 1 selon l'invention comprend en plus une source de rayons ultra-violets 32 pilotée et alimentée par l'unité de contrôle 13. La source de rayons ultra-violets 32 est positionnée dans le volume interne 28 de la cage 20. Par exemple, la source de rayons ultra-violets est un tube fixé et maintenu par la deuxième paroi 24 et s'étendant coaxialement selon l'axe longitudinal X au moins dans le volume interne 28. Le tube peut s'étendre en dehors de la cage 20 à travers l'orifice central 23, ou encore en aval de la deuxième paroi 24 à travers cette dernière. Par exemple, la source de rayons ultra-violets 32 est une lampe à ultra-violets (au mercure) ou encore une ou plusieurs diodes électroluminescentes à ultra-violets, ou encore une source de lumière puisée.

En variante supplémentaire, l'espace ainsi délimité entre les deux parois grillagées de l'anneau 26 reçoit un élément filtrant à base de charbon actif, qui est ainsi disposé dans la conduite principale 10, entre la sortie d'air 12 et l'ensemble adsorbant 21. Un tel élément filtrant permet de retirer des composés chimiques de pollution ou d'éviter que des espèces oxydantes qui sont produites par les moyens de production de plasma 31,310, telles que de l'ozone (O3), ne soient libérées par la sortie d'air 12. Eventuellement, l'efficacité anti-ozone de l'élément 41 peut être augmentée en y associant des réactifs tels que l'iodure de potassium (Kl) ou l'oxyde de manganèse (MnO2).

L'élément adsorbant 21 (ainsi que celui éventuellement présent dans l'élément 41) est efficace pour adsorber des composés organiques volatils qui sont présents dans le flux d'air 2, et peut être régénéré en étant mis en contact avec des espèces actives chimiquement, telles que des radicaux libres ou des composés oxydants. Par exemple, les éléments adsorbant peuvent être à base de gel de silice (SiO2) ou de zéolithes, éventuellement en combinaison avec un ou plusieurs catalyseurs appropriés imprégnés ou non. Un tel élément adsorbant est disponible commercialement, avec des supports et/ou formes variables pour les matériaux actifs en adsorption : billes, granulats, substrats tissés, mousses, structures en nid d'abeilles, etc.

L'unité de contrôle 13 du système de traitement d'air 1 selon l'invention permet un pilotage alternativement selon un fonctionnement de traitement d'air ou selon un fonctionnement de régénération de l'ensemble adsorbant 21.

Le système de traitement d'air 1 selon l'invention peut être équipé d'au moins un capteur 50 qui est sélectionné et mis en oeuvre pour évaluer l'efficacité du traitement d'air, et/ou celle du fonctionnement de régénération. Selon une première possibilité, un tel capteur peut être disposé à proximité de la sortie d'air 12 de la conduite principale 10, comme cela est illustré sur la figure 1, pour mesurer une quantité résiduelle de certains composés polluants dans le flux d'air 2 qui est expulsé en sortie du système de traitement d'air 1 selon l'invention. De cette façon, un fonctionnement de régénération peut être automatiquement initié lorsque cette quantité de composés polluants devient supérieure à un seuil prédéterminé. Selon une deuxième possibilité, le capteur peut être destiné à surveiller une réduction de certains produits de dégradation des composés polluants dans le flux d'air 2 qui circule à l'intérieur du système de traitement d'air 1 selon l'invention pendant son fonctionnement de régénération. Par exemple, une quantité résiduelle de monoxyde de carbone peut ainsi être détectée. De cette façon, la durée du fonctionnement de régénération peut être ajustée à celle qui est juste nécessaire pour régénérer l'ensemble adsorbant 21 et éliminer les produits de dégradation des composés polluants qui pourraient être toxiques, sans que cette durée soit prolongée inutilement. Ainsi, la durée utile de fonctionnement du système de traitement d'air 1 selon l'invention peut être augmentée, tout en garantissant l'efficacité du traitement. Tout surcroît de consommation énergétique due à un fonctionnement de régénération qui ne serait pas utile, peut ainsi être évité. Enfin, selon une troisième possibilité, le capteur peut être sélectionné pour détecter une concentration d'ozone dans le système de traitement d'air 1 selon l'invention en fin de fonctionnement de régénération. Deux au moins parmi ces trois fonctions de capteur peuvent être combinées, en fonction de la nature du capteur qui est utilisé. En variante de réalisation, le capteur 50 comporte un module permettant l'envoi de données de mesure vers un serveur.

De manière optionnelle, le système de traitement de l'air 1 selon l'invention comporte un dispositif d'ionisation 40 de l'air positionné au niveau de la sortie d'air 12 de la conduite principale 10.

De manière optionnelle, le système de traitement de l'air 1 selon l'invention comporte un dispositif de régulation d'une hydrométrie 60 de l'air sortant du système de traitement de l'air 1 selon l'invention. Le dispositif de régulation d'une hydrométrie 60 est positionné au voisinage de la sortie d'air 12 de la conduite principale. Le dispositif de régulation d'une hydrométrie 60 comporte un absorbeur d'humidité et/ou un générateur de vapeur d'eau.

Bien entendu, il est possible d'apporter à l'invention de nombreuses modifications sans pour autant sortir du cadre de celle-ci.

## Revendications

1. Système de traitement (1) d'un flux air (2) comprenant
- Une conduite principale (10) d'écoulement du flux d'air comprenant une entrée (11) et une sortie (12) d'air,
- Des moyens de ventilation (111,121) agencés de sorte à générer le flux d'air (2) dans la conduite principale entre l'entrée et la sortie d'air,
- Un ensemble adsorbant de polluants (21,41) susceptibles d'être présents dans l'air, perméable à l'air et disposé à travers le flux d'air au sein de la conduite principale,
- Des moyens de production de plasma (31;310) agencés de sorte à produire des espèces actives capables de dégrader des composés polluant préalablement adsorbés par l'ensemble adsorbant, et
- Une unité de contrôle (13) agencée de sorte à activer, lors d'un fonctionnement du système de traitement d'un flux d'air, les moyens de production de plasma durant une phase de régénération de l'ensemble adsorbant,
**caractérisé en ce que** les moyens de production de plasma sont positionnés au sein de l'ensemble adsorbant, les espèces actives produites étant libérées au sein de l'ensemble adsorbant lors de la mise en oeuvre des moyens de production de plasma.

2. Système selon la revendication 1, **caractérisé en ce que** l'ensemble adsorbant (21) est disposé parallèlement à la conduite principale.

3. Système selon la revendication 2, **caractérisé en ce que** l'ensemble adsorbant (21) forme un cylindre coaxial à la conduite principale.

4. Système selon l'une des revendications 1 à 3, **caractérisé en ce qu'**il comporte une cage (20) dans laquelle est aménagé l'ensemble adsorbant.

5. Système selon la revendication 4, **caractérisé en ce que** la cage comporte une première paroi pleine d'extrémité (22) comprenant un orifice central (23) et s'étendant en travers de la conduite principale, une portion cylindrique à double paroi grillagée (25) s'étendant en saillie depuis la première paroi d'extrémité autour de l'orifice central et recevant l'ensemble adsorbant, une deuxième paroi pleine d'extrémité (24) s'étendant en travers de la conduite principale, en regard de l'orifice central.

6. Système selon la revendication 5, **caractérisé en ce que**, la deuxième paroi pleine d'extrémité comporte, dans son plan, sur une périphérie circonférentielle radialement externe (241) un anneau à double paroi grillagée (26).

7. Système selon l'une des revendications 1 à 6, **caractérisé en ce que**, en amont de l'ensemble adsorbant dans le flux d'air, il comporte des moyens de filtration (40) des particules susceptibles d'être présentes dans l'air.

8. Système selon la revendication 7, **caractérisé en ce que** les moyens de filtration des particules comprennent un précipitateur électrostatique.

9. Système selon l'une des revendications 1 à 8, **caractérisé en ce qu'**il comporte un filtre HEPA, UPLA, ou à charbon actif ou autres.

10. Système selon la revendication 9 et la revendication 6, **caractérisé en ce que** le filtre HEPA ou à charbon actif (41) est agencé entre les parois de l'anneau à double paroi grillagée (26).

11. Système selon l'une des revendications 1 à 10, **caractérisé en ce qu'**il comporte en outre une source de rayons ultra-violets (32) positionnée dans le flux d'air circulant au sein de la conduite principale.

12. Système selon l'une des revendications 1 à 11, **caractérisé en ce que** les moyens de production de plasma comprennent une série d'électrodes (31 ;310) uniformément réparties dans l'ensemble adsorbant.

13. Système selon la revendication 12, **caractérisé en ce que** les électrodes sont des électrodes allongées formant des tiges (31).

14. Système selon la revendication 12, **caractérisé en ce que** les électrodes sont des électrodes de forme annulaire (310).

15. Système selon l'une des revendications 1 à 14, **caractérisé en ce qu'**il comporte un capteur 50 relié à l'unité de contrôle 13 et fournissant à l'unité de contrôle des informations de qualité de l'air mesuré par ledit capteur.
